# EUROPEAN PATENT SPECIFICATION

(11) **EP 1 452 696 B1**
(45) Date of publication and mention of the grant of the patent: **19.03.2008**
(21) Application number: 03258005.2
(22) Date of filing: 18.12.2003
(51) Int. Cl.: F01D 11/12

(54) **A method of manufacturing a sealing element**
Verfahren zur Herstellung eines Dichtungselements
Procéde de fabrication d'un élément d'étanchéité

(30) Priority: 27.02.2003 GB 0304546
(43) Date of publication of application: 01.09.2004
(73) Proprietor: ROLLS-ROYCE PLC, London, SW1E 6AT (GB)
(72) Inventor: Tuffs, Martin, Nottingham NG9 6ET (GB); Shipton, Mark Henry, deceased (GB); Mei, Junfa, Birmingham B31 2BE (GB); Xinhua, Wu, Birmingham B31 2BE (GB)
(74) Representative: Bird, Vivian John

(56) References cited:
- EP-A- 0 256 790
- EP-A- 0 573 928
- EP-A- 1 146 204
- GB-A- 1 361 814
- US-A- 3 042 365
- US-A- 3 126 149
- US-A- 5 160 822
- US-A- 5 622 638
- US-A- 5 704 759
- US-A- 5 951 892

## Description

The invention relates to an abradable seal for a gas turbine engine.

In gas turbine engines, some of the aerofoil blades and in particular the turbine blades are conventionally surrounded by a sealing structure, which may comprise an annular seal or a seal segment ring made up of a plurality of arc shaped seal segments. Because the turbine blades expand and contract as their temperatures vary in use and centrifugal loads are imposed upon them, it is normal to provide a small gap between the turbine blade tips and the seal, to allow for this fluctuation.

It is known to provide an abradable seal for sealing between the turbine blade tips and the sealing structure. This enables the tips of the turbine blades to wear away the seal to an optimum size and shape without causing damage to the turbine blade tips. Such abradable seals may consist of an open cell structure formed from a densified compacted powder metal, as described in British Patent GB 1361814. Alternatively such abradable seals may consist of an open cell foil honeycomb which is brazed in place and subsequently filled with a suitable abradable material, such as a metallic powder. As stated in the European Patent Application EP1146204 it is also known to directly machine, perhaps by electro discharge machining (EDM), a sealing segment made from an oxidation resistant alloy to form a honeycomb structure that is also filled with a suitable abradable material, such as a metallic powder. In both cases the honeycomb acts as a support for the abradable material. The supporting honeycomb is subsequently partially worn away by the rotating turbine blades, thus forming a seal.

Certain problems are associated with the above seals. The seals may suffer from progressive oxidation attack if the foil material has inadequate oxidation resistance. In addition, problems may be experienced with the brazed joints, and the seals may be difficult to cool.

Additional problems arise when the honeycomb structure has worn and needs to be refurbished. Sealing components produced by vacuum brazing thin foil honeycomb structures to a sealing segment are refurbished by machining away remnants of the worn honeycomb and re attaching a new honeycomb via vacuum brazing. While the brazing quality may be adequate for low temperature applications, at elevated temperatures the brazing will lose its integrity and fail, thereby limiting this technique to low temperature applications.

Where abradable portions have been machined from a solid sealing segment it is required to replace the seal segment in its entirety, thereby adding to the overall cost of the refurbishment process.

United States Patent No 5160822 teaches of depositing material evenly over the entire surface of the tip of a gas turbine engine aerofoil.

According to the invention, there is provided a method of manufacturing a sealing element for positioning radially outwardly of at least some of the aerofoil blades in a gas turbine engine, the method comprising
forming a seal structure having a radially inner surface region;
forming a plurality of projecting walls at the radially inner surface region to form a plurality of open cells;
characterised in that
said projecting walls have a thickness of up to about 0.4 mm,
and are formed by powder fed laser weld deposition.

Powder fed laser welding has previously been employed in the refurbishment of gas turbine engine components, but only for the refurbishment of turbine blades. Specifically the technique has been used to build up blade tips that have been worn away during engine running with the capability to provide a wall thickness up to approximately 1.0 mm. Laser welding can create a cell structures not achievable by other machining methods such as EDM. Structures for EDM have to account for EDM tool withdrawal after machining is complete and are therefore limited to producing tapered structures with no overhangs. Additionally laser welding obviates the need for expensive tooling and permits a larger range of materials to be used for forming the cell structure.

The method may comprise forming a seal structure configured to form at least part of a generally annular housing. The sealing element may comprise a seal segment.

Preferably the walls are formed to project substantially radially inwardly from the radially inner surface region. The walls may also be configured to project inwardly at an angle of up to about 30 degrees from the radial direction.

Preferably radially inner edges of the walls are formed to define a substantially arc shaped inner face of the sealing element.

Preferably the seal structure is provided over substantially the whole of a radially inner surface region of the sealing element.

The thickness of the walls may reduce generally towards their radially inner edges. The walls may be shaped to form a plurality of radially open cells and each cell may be open only at a radially inner side. One or more of the cells may be substantially diamond shaped when viewed in the radial direction. The cells may be all substantially the same size or may be different sizes. The thickness of the walls may increase at their radially inner edges, such that the size of the cells reduces at their open radially inner sides.

According to the invention there is further provided a sealing element, wherein openings between the walls are at least partially filled with an abradable sealing material. The abradable sealing material may protrude radially inwardly beyond radially inner edges of the walls.

The walls may be abradable. By "abradable" it is meant that the material may be worn away by contact with the tips of rotating aerofoil blades, without causing significant damage to the blade tips.

According to the invention there is further provided a seal segment ring for a turbine of a gas turbine engine, the seal segment ring including a plurality of sealing elements as defined above.

According to the invention there is further provided a gas turbine engine including a turbine comprising a seal segment ring as defined in the preceding paragraph. The turbine may be the high pressure turbine of the gas turbine engine.

According to the invention there is further provided a method of manufacturing a sealing element for positioning radially outwardly of at least some of the aerofoil blades of a gas turbine engine, the method including the step of integrally forming in a radially inner surface region of the seal segment a seal structure comprising a plurality of radially inwardly projecting walls.

The projecting walls may be deposited onto a structure onto a substrate using powder fed laser welding. The weld deposited structure is machined using conventional techniques to achieve the close tolerances necessary.

According to the invention there is further provided a method of manufacturing a sealing element wherein one or more of the cells is substantially diamond shaped when viewed in the radial direction.

According to the invention there is further provided a method of manufacturing a sealing element wherein the inwardly projecting walls are formed in a chevron pattern.

According to the invention there is further provided a method of manufacturing a sealing element wherein the inwardly projecting walls are formed in an arcuate pattern.

According to the invention there is further provided a sealing element wherein the inwardly projecting walls are provided at an angle to the longitudinal axis of the engine that the seal is built into.

According to the invention there is further provided a sealing element wherein the inwardly projecting walls are provided substantially circumferentially around the radially inner surface of the sealing element.

Powder fed laser welding makes it possible to build up the projecting walls directly, with or without a subsequent machining operation. The projecting walls are formed from an alloy with temperature capability similar to or better than the substrate.

The substrate may be made from any oxidation resistant material and need not be a costly highly oxidation resistant material. Utilising this technique to deposit high oxidation resistant material only where it is required allows a cheaper material to be selected for the substrate, thereby reducing the overall cost of the finished component.

An abradable is laid in the cells to help further reduce over tip leakage. If the walls are worn away or oxidised then this method provides a method of refurbishing the component to its original dimensions by depositing a network of inwardly projecting walls, or grid, onto the substrate surface. Some finish machining may be required.

Powder fed laser welding also has the advantage that it allows abradable patterns that have more complex geometries and which retain the abradable filler more effectively.

Embodiments of the invention will be described for the purpose of illustration only, with reference to the accompanying drawings in which:-
Figure 1 is a schematic diagram of a ducted fan gas turbine engine;
Figure 2 is a diagrammatic section through a turbine seal segment according to the invention;
Figure 3 is a diagrammatic view in the direction of the arrow Y in Figure 2;
Figure 4 is a diagrammatic section on the line X-X in Figure 3;
Figure 5 is a diagrammatic partial detail of a cell structure of a turbine seal segment according to the invention;
Figure 6 is a pictorial representation of the laser welding apparatus set up;
Figure 7A is a pictorial representation of the structure of one embodiment of the cell structure;
Figure 7B is a pictorial representation of the structure as shown in Figure 7A with undersize walls;
Figure 7C is a pictorial representation of the structure as shown in Figure 7A with oversize walls;
Figure 8 is a diagrammatic section through an alternative turbine seal segment according to the invention;
Figure 9 is a diagrammatic view in the direction of the arrow x in Figure 8;
Figure 10 is a diagrammatic view of an alternative embodiment of the cell structure;
Figure 11 is a cross sectional view of the cell structure;
Figure 12 is a cross sectional view of an alternative embodiment of the cell structure;
Figure 13 is a diagrammatic view of an alternative embodiment of the cell structure;
Figure 14 is a diagrammatic view of an alternative embodiment of the cell structure; and
Figure 15 is a diagrammatic view of an alternative embodiment of the cell structure.

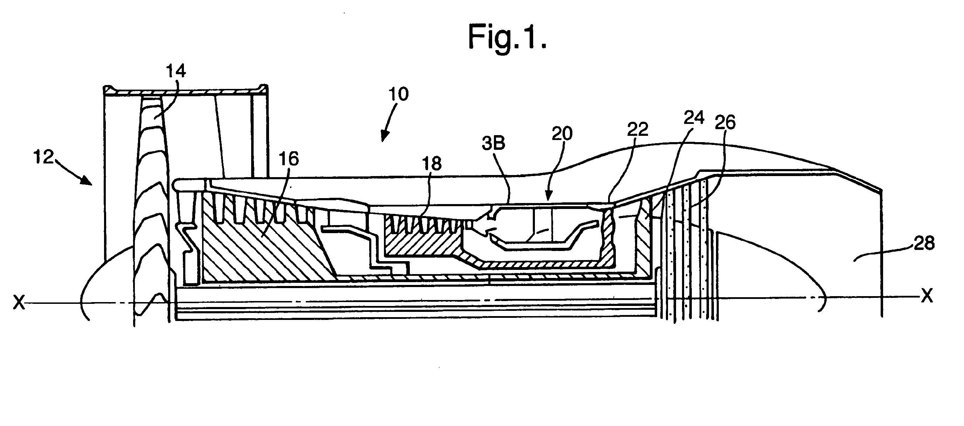

With reference to Figure 1 a ducted fan gas turbine engine generally indicated at 10 comprises, in axial flow series, an air intake 12, a propulsive fan 14, an intermediate pressure compressor 16, a high pressure compressor 18, combustion equipment 20, a high pressure turbine 22, an intermediate pressure turbine 24, a low pressure turbine 26 and an exhaust nozzle 28.

The gas turbine engine 10 works in the conventional manner so that air entering the intake 12 is accelerated by the fan 14 to produce two air flows, a first air flow into the intermediate pressure compressor 16 and a second airflow which provides propulsive thrust. The intermediate pressure compressor 16 compresses the air flow directed into it before delivering the air to the high pressure compressor 18 where further compression takes place.

The compressed air exhausted from the high pressure compressor 18 is directed into the combustion equipment 20 where it is mixed with fuel and the mixture combusted. The resultant hot combustion products then expand through and thereby drive the high, intermediate and low pressure turbines 22, 24 and 26 before being exhausted through the nozzle 28 to provide additional propulsive thrust. The high, intermediate and low pressure turbines 22, 24 and 26 respectively drive the high and intermediate pressure compressors 16 and 18 and the fan 14 by suitable interconnecting shafts.

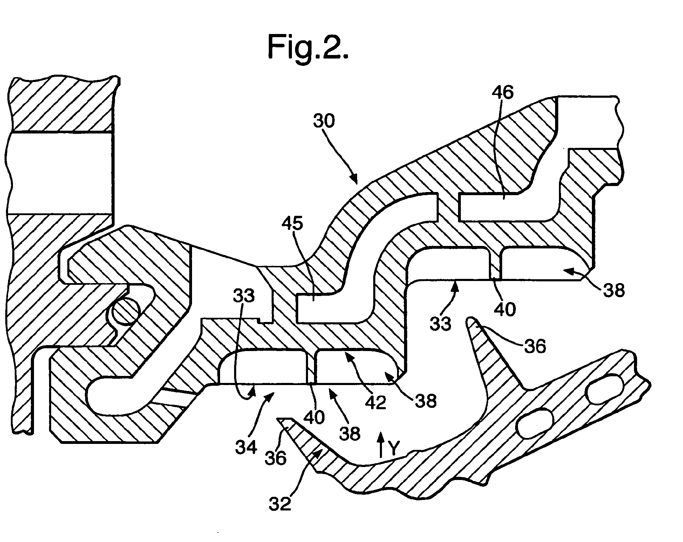

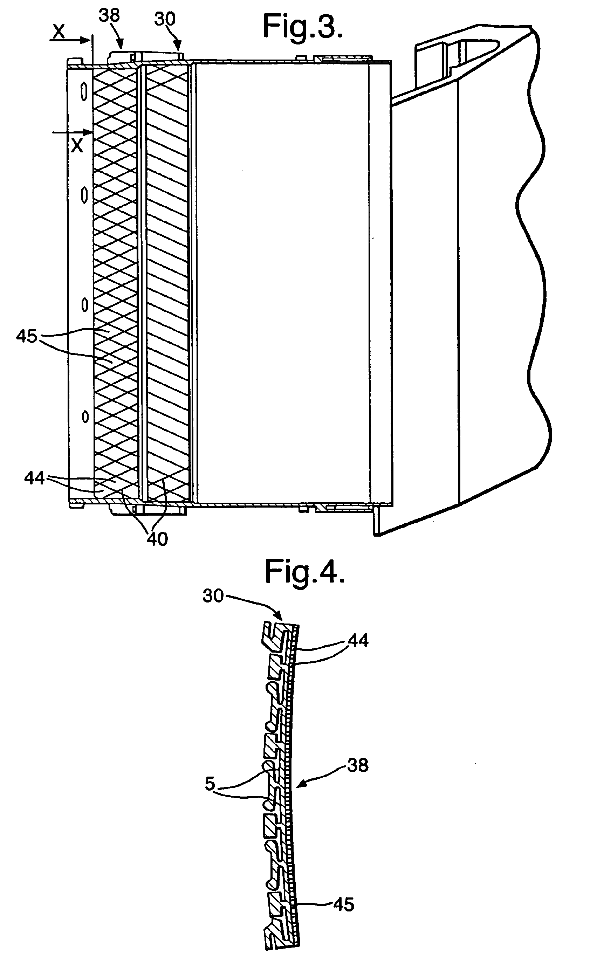

Figures 2 to 4 illustrates a turbine seal segment 30 for the high pressure turbine 22. A plurality of arc shaped sealing elements in the form of a turbine seal segment together form a substantially cylindrical seal segment ring which encases the rotating high pressure turbine blades 32 (see Figure 2). A small gap 34 is provided between the tips 36 of the turbine blades 32 and a radially inner surface 33 of the seal segment 30. The size of the gap 34 varies with time for various reasons, including variations in the temperatures of the turbine blades 32 and other components.

Referring to the figures, according to an embodiment of the invention, an open cell structure 38 is formed integrally with the turbine seal segment 30 in the region of its radially inner surface 33. The open cell structure 38 includes upstanding walls 40 which project radially inwardly. The walls 40 define therebetween a plurality of open cells 44, the cells 44 having generally circumferential bases 42. The cells 44 are able to receive and support an abradable material 45 such as a metallic powder.

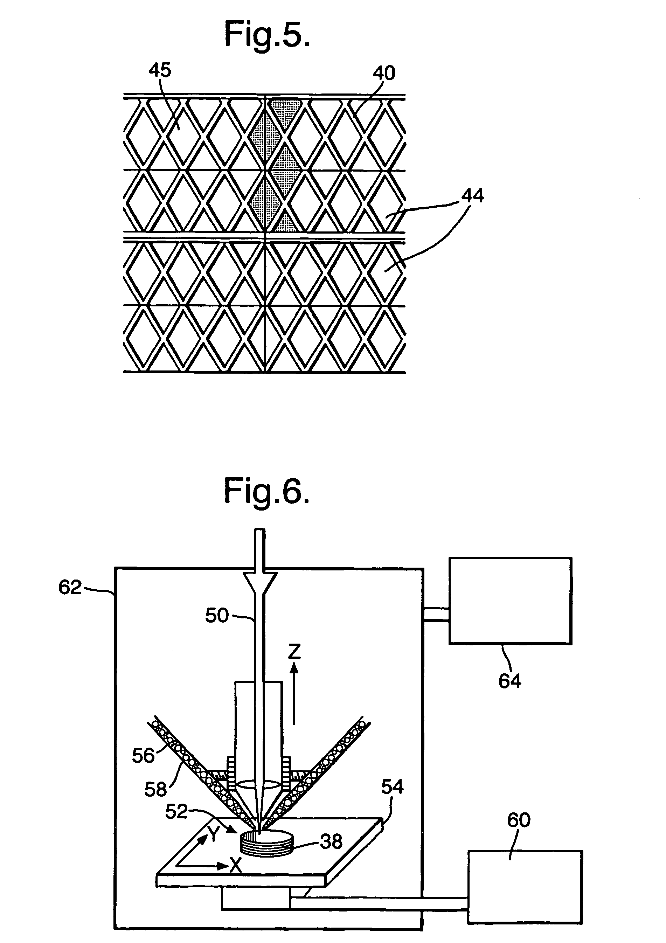

In the example illustrated in figure 5, the cells 44 are generally diamond shaped when viewed in the radial direction of the turbine and the walls are oriented at about 30° to the axial direction of the turbine, in use. A first set of generally parallel walls crosses over and intersects a second set of generally parallel walls to form the diamond shaped cells 44.

The walls 40 may project up to about 3mm radially inwardly from the surface 42. The walls 40 have a width of about 0.2mm to 0.4mm and the generally parallel walls are positioned about 2mm to 2.5mm apart. In the example illustrated, the walls are generally rectangular in section, although one skilled in the art would appreciate that other cross-sectional shapes may achieve the same effect.

Cooling channels 46 are provided within the seal segment 30, radially outwardly of the cell structure 38. Air flowing through the cooling channels helps to cool the cell structure 38 and any abradable material 45 located therein.

The open cell structure 38 may be formed by laser weld deposition. The weld alloy chosen need not be made from the same material as the seal segment 30. In fact there may be advantages in choosing a different material. The use of a highly oxidation resistant material to form the cell structure 38 obviates the needs to form the segment 30 from such a material.

Referring now to Figure 6, a laser 50 is provided and focused down to provide the required energy density at a working region 52 on the substrate 54. Powder 56 is supplied via powder feed tubes 58 to the working region 52. The laser 50 and the powder feed tubes 58 are all held static. The position and movement of the substrate is controlled by a computer control system 60. The focused laser melts the powder 56 and the substrate 54 which mix and solidify when the laser 50 moves to a new position. In order to build up the structure 38 the laser may need to pass over the same region a number of times. Each pass puts down approximately 0.5mm. The laser welding equipment and working region 52 are enclosed in a sealed compartment 62 or "glove box" in which the oxygen and moisture level is controlled by a gas purifier 64. This provides a controlled atmosphere, thereby preventing contamination of the weld pool.

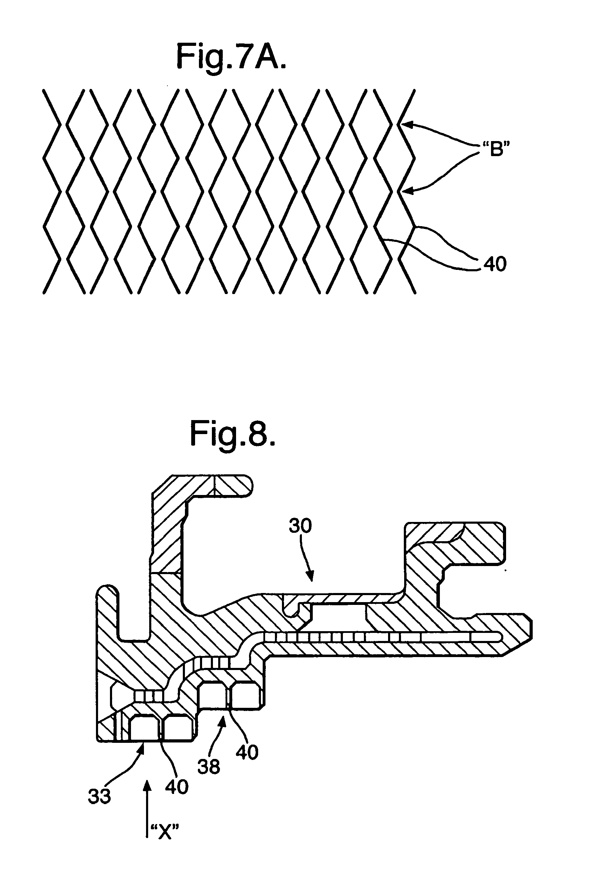

In constructing the walls 40, particular advantage is found in avoiding the crossing over of weld material. By way of non limiting example, in the construction of the diamond shaped pattern, lines of weld are laid down to form adjacent zigzag lines, positioned such that the apex of each zigzag line is in close proximity to the apex of an adjacent zigzag line as shown in Figure 7A.

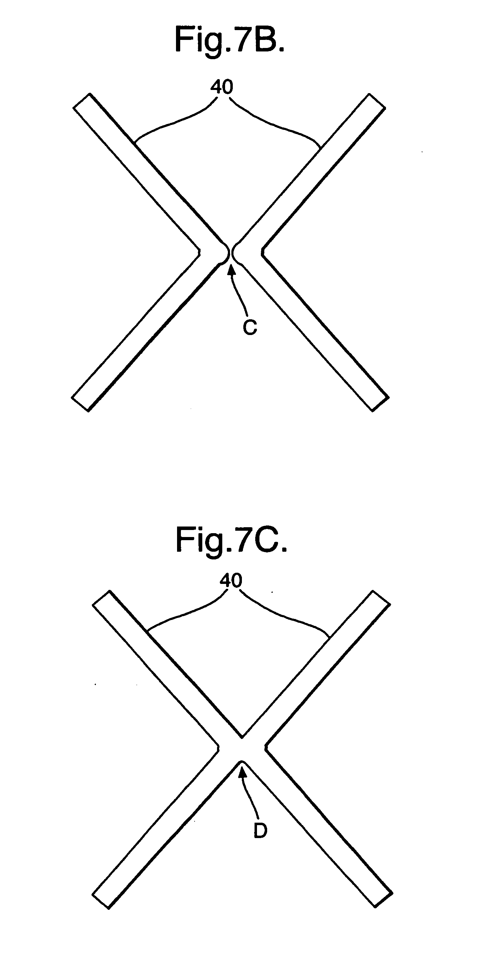

Preferably the apex of each zigzag weld line should touch the apex of an adjacent zigzag weld line as it has been shown that such a configuration will enhance structural integrity of such a structure. It will be appreciated that the thickness of the walls 40 may not be constant. In regions where the wall thickness is undersize there will be a gap between apex's of the zigzag lines as indicated at "C" in Figure 7B. Conversely in regions where the wall thickness is oversize the apex of the adjacent zigzag lines will overlap as indicated at "D" in Figure 7C.

Avoiding the crossing over of weld and/or of weld overlap ensures the integrity of the weld is maintained. It has been found that if the weld lines do cross over, the larger amount of material deposited at the node may form a dimple (or "dome") of weld. This introduces residual stress at the node that may result in cracks and voids being formed. The cracks may spread to the rest of the structure.

Hence it will be appreciated that the preferred configuration comprises a wall structure wherein the majority of the zigzag weld line apex's are touching, rather than overlapping or formed with a small gap between the weld line apex's.

Although it will be appreciated that any suitable combination of equipment may be employed, it has been found that CO₂ laser of type TR1750/380 (Wegmann-Baasel Laser GmbH) used in conjunction with a Sulzer Metco type 9MPE powder feed unit, a X-Y table and Z-axis motor, and a CNC control unit produce the required results.

The following operational parameters have been found to produce satisfactory results:-
laser power: between 144 to 432W
laser scanning speed: between 200 to 400 mm/min
powder feed rate: between 8 to 20 g/min
powder carrier gas: argon
carrier gas flow rate: 12 l/min.

The laser 50 is operated in pulse mode, the pulse frequency being set at 1kHz. The peak and trough of the pulse is set to 100% and 0% of the setting power respectively. In order to obtain the desired small focal spot of the laser beam, it may be required to position a beam expander (not shown) above the focal lens.

Particular benefit was found in employing four powder feed tubes 58. The four tubes were arranged symmetrically and equi-spaced around the laser beam 50, with the angle between each of the tubes 58 and the laser 50 set to 30°.

It will be appreciated that the above are cited only as examples and that satisfactory results may be achieved with equipment having a different specification and configuration.

Prior to deposition the surface of the substrate 54 is scanned with the laser 50 along the paths where the walls 40 are to be built. This action cleans off any contaminants such as oxide film from the surface of the substrate 54, thereby improving the bond between the substrate 54 and the wall 40.

It was found to be of particular benefit to use a relatively high laser power setting for the cleaning scan and for the first few welding passes than for subsequent welding passes. Doing so heats up the substrate 54, thereby improving the bond between the substrate 54 and the structure 38.

The substrate 54 is selected from at least one of a group of materials comprising nickel based superalloys, CMSX-4, MM002, C1023 and IN713LC. A man skilled in the art would appreciate that this list is not exhaustive.

The powder 56 is selected from at least one of a group of materials comprising CM186, Rene 142, Haynes 214 and Amdry 955. A man skilled in the art would appreciate that this list is not exhaustive. The powder size used was in the range of 50 µm to 100 µm, although it will be appreciated that other powder sizes may prove to have equal utility.

After the cell structure 38 has been formed it may need to be machined to achieve the desired profile. The surfaces of the cells 44 may be nickel plated, and the cells 44 may subsequently be filled with an abradable material 45. Alternatively, the cells may be overfilled, such that the abradable material 45 projects radially inwardly beyond the radially inner edges of the walls 40. In this case, the open cell structure 38 acts as a retention system for the abradable material 45, thus minimising damage to the walls 40.

The abradable material 45 is selected from at least one of a group of materials comprising Porous YSZ, porous Alumina and hollow NiAl powder. A man skilled in the art would appreciate that this list is not exhaustive.

The above described embodiment thus provides a turbine seal segment which overcomes many of the problems associated with the prior art. There is no brazed joint between the open cell structure 38 and the remainder of the seal segment 30 and thus no possibility of the open cell structure 38 becoming detached from the substrate 54. In addition, the depth of the abradable material 45 may be reduced since extra depth to accommodate wicked braze material is not required. Additionally, the described embodiment has the advantage over electro discharge machining in that having worn away the structure formed by electro discharge machining there is no material available to form a new cell structure 38. The described embodiment provides a means for adding material to the seal segment 30.

The walls of the open cell structure 38 have a relatively high oxidation resistance and are easily cooled because they are positioned near to the cooling channels 46.

In use the blade tips of the high pressure turbine blades 32 wear away the abradable material 45 and the walls 40.

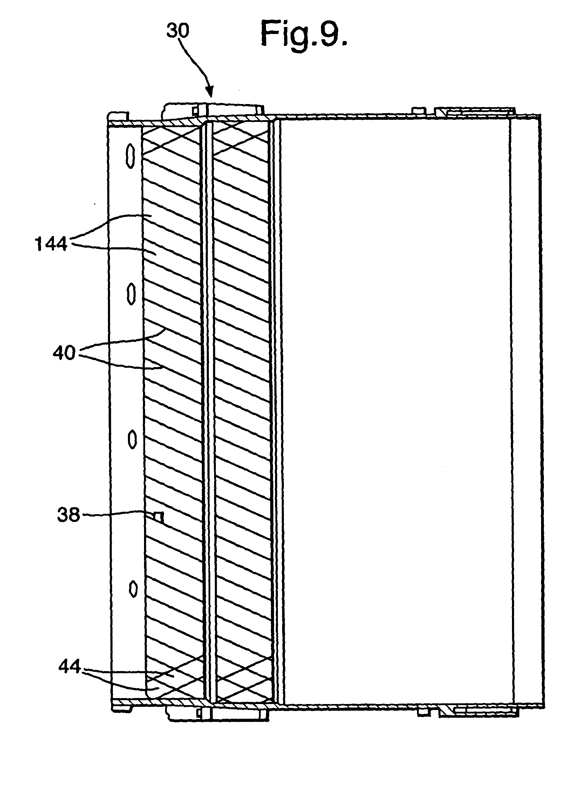

Figure 8 and 9 illustrate an alternative embodiment of the invention, in which corresponding reference numerals are used for equivalent parts. In this embodiment the open cell structure 38 includes upstanding walls 40 which define therebetween a plurality of cells. In this embodiment a small number of generally diamond shaped cells 44 are located at the outer edges of the seal segment. However the majority of the cells 144 form elongate rhomboid shapes when viewed in the radial direction of the turbine.

Various modifications may be made to the above described embodiment without departing from the scope of the invention. The section of the walls illustrated is generally rectangular. However, an "Eiffel tower" section may be used, to improve cooling. In this embodiment, the width of the walls 40 is increased towards their bases, thus providing improved transfer of heat to the cooling channels 46.

The width of the walls 40 may however be somewhat increased at their radially inner edges, forming a re-entrant shape, thus helping to prevent abradable material 45 from becoming detached from the cell structure.

The open cells 38 need not be diamond or rhomboid shaped, but for example may be rectangular, triangular, etc. The cells 38 may be discrete as illustrated, or may interconnect with one another.

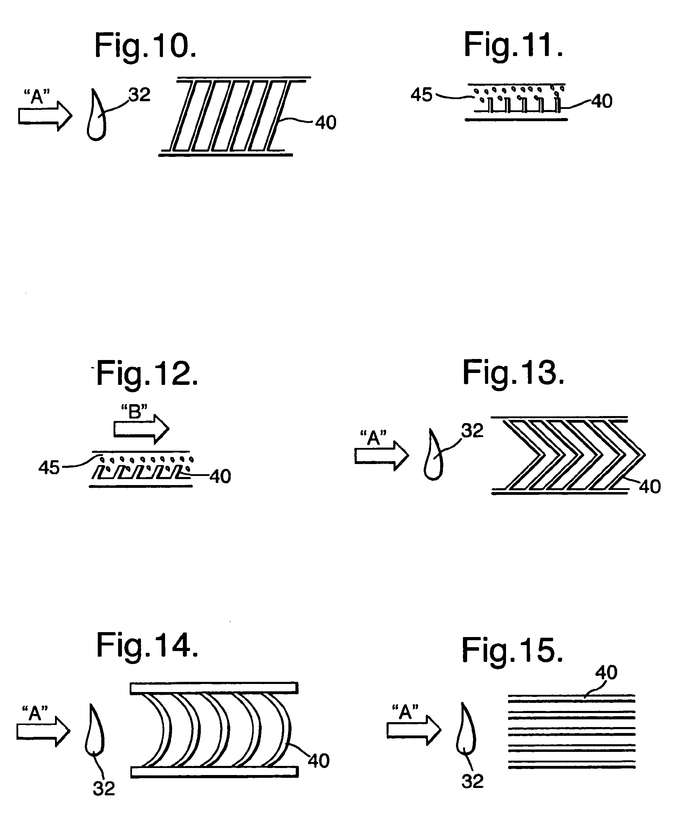

A plurality of closely spaced walls or rails, which may be parallel, may form a seal structure. In an alternative embodiment the walls 40, as shown in figure 10, are configured at an angle to the longitudinal axis of the engine. A cross section through this structure, as shown in figure 11, illustrates overfill of the cell structure 40 with the abradable 45.

Figure 12 illustrates a cross section of an alternative embodiment wherein the walls 40 are inclined in the direction of travel of the turbine blade 32, as indicated by arrow "B". The walls 40 are inclined up to about 30 degrees from the radial direction.

In an alternative embodiment the walls 40 may be formed in a chevron pattern, with the chevrons orientated circumferentially, as shown in figure 13. This configuration has been found to not only to resist coating loss through thermal shock but also to reduce loss of coating from the rails during blade incursion. Additionally it has been found that the chevron configuration, arranged so that the wall 40 is angled such that it trails behind both the leading and trailing edges of the blade 32, produces a cleaner cut of the blade 32 than were the wall 40 angled forwards. An arc arrangement as shown in figure 14 would produce the same effect. A configuration where the walls 40 are provided substantially circumferentially around the radially inner surface of the sealing element, that is to say normal to the blade direction as in figure 15, will also produce a clean cut of the blade 32.

In the embodiments described in Figure 10 to 15 it can be appreciated that if the direction of travel of the turbine blade 32 across the structure is as shown generally by arrow "A" then the cell structure 40 will act as a retention matrix for abradable material 45.

Alternatively the seal structure 38 may form the seal with no additional sealing material being used. The weld alloy, and consequently the cell walls 40, may be utilised as an abradable.

Subsequent to deposition, electro-chemical machining or etching may be used to reduce the thickness of the walls 40 in the sealing structure 38.

It will be appreciated that the method of producing the projecting walls 40 can also be employed to restore or refurbish thin wall abradable grids that have deteriorated in service.

## Claims

1. A method of manufacturing a sealing element for positioning radially outwardly of at least some of the aerofoil blades (32) in a gas turbine engine (10), the method comprising:
forming a seal structure (38) having a radially inner surface region (33);
forming a plurality of projecting walls (40) at the radially inner surface region (33) to form a plurality of open cells (44);
**characterised in that**
said projecting walls (40) are formed to have a thickness of up to about 0.4mm,
and are formed by powder fed laser weld deposition.

2. The method as claimed in claim 1, **characterised in that** forming the seal structure (38) comprises forming a seal structure (38) configured to form at least part of a generally annular housing.

3. The method as claimed in claim 1 or claim 2 **characterised in that** the walls (40) are formed to project substantially radially inwardly from the radially inner surface region (33).

4. The method as claimed in claim 1 or 2 wherein the walls (40) are formed to project inwardly at an angle of up to about 30 degrees from the radial direction.

5. The method as claimed in any preceding claim, **characterised in that** radially inner edges of the walls are formed to define a substantially arc shaped inner face of the sealing element.

6. The method as claimed in any preceding claim, **characterised in that** the seal structure (38) is formed over substantially the whole of a radially inner surface (33) region of the sealing element.

7. The method as claimed in any preceding claim, **characterised in that** at least one of the projecting walls (4) is formed to have a thickness that generally decreases towards a radially inner edge of the at least one projecting wall (40).

8. The method as claimed in any one of claims 1 to 6 **characterised in that** at least one of the projecting walls is formed to have a thickness that increases towards a radially inner edge of the at least one projecting wall (40).

9. The method of any preceding claim **characterised in that** each cell (44) is open only at a radially inner side.

10. The method of any preceding claim **characterised in that** one or more of the cells (44) is substantially diamond shaped when viewed in the radial direction.

11. The method of any preceding claim wherein the inwardly projecting walls (40) are formed in a chevron pattern.

12. The method of any preceding claim wherein the inwardly projecting walls (40) are formed in an arcuate pattern.

13. The method as claimed in any preceding claim wherein the inwardly projecting walls (40) are formed to have a height up to about 3mm.

14. The method as claimed in any preceding claim wherein the inwardly projecting walls (40) are formed to be spaced about 2mm apart.

## Patentansprüche

1. Verfahren zur Herstellung eines Dichtungselements zum Positionieren radial außerhalb mindestens einiger der Tragflügelschaufeln (32) in einem Gasturbinentriebwerk (10), wobei das Verfahren umfasst:
Bilden einer Dichtungsstruktur (38) mit einem radial inneren Oberflächenbereich (33),
Bilden einer Mehrzahl vorspringender Wände (40) an dem radial inneren Oberflächenbereich (33) zum Bilden einer Mehrzahl offener Zellen (44),
**dadurch gekennzeichnet, dass** die vorspringenden Wände (40) so ausgebildet sind, dass sie eine Dicke bis zu etwa 0,4 mm haben und durch pulvergespeisten Laserschweissauftrag gebildet sind.

2. Verfahren nach Anspruch 1, **dadurch gekennzeichnet, dass** das Formen der Dichtungsstruktur (38) das Formen einer so konfigurierten Dichtungsstruktur (38) umfasst, dass mindestens ein Teil eines etwa ringförmigen Gehäuses gebildet wird.

3. Verfahren nach Anspruch 1 oder Anspruch 2, **dadurch gekennzeichnet, dass** die Wände (40) so ausgebildet sind, dass sie im wesentlichen radial einwärts von dem radial inneren Oberflächenbereich (33) vorspringen.

4. Verfahren nach Anspruch 1 oder 2, wobei die Wände (40) so ausgebildet sind, dass sie unter einem Winkel von bis zu etwa 30° zur Radialeinrichtung einwärts vorspringen.

5. Verfahren nach einem der vorhergehenden Ansprüche, **dadurch gekennzeichnet, dass** radial innere Ränder der Wände so ausgebildet sind, dass sie eine im wesentlichen bogenförmige Innenfläche des Dichtungselements bilden.

6. Verfahren nach einem der vorhergehenden Ansprüche, **dadurch gekennzeichnet, dass** die Dichtungsstruktur (38) im wesentlichen über der Gesamtheit eines radial inneren Oberflächenbereichs (33) des Dichtungselements gebildet wird.

7. Verfahren nach einem der vorhergehenden Ansprüche, **dadurch gekennzeichnet, dass** mindestens eine der vorspringen Wände (4) so ausgebildet ist, dass sie eine Dicke hat, die zu einem radial inneren Rand der mindestens einen vorspringenden Wand (40) allgemein abnimmt.

8. Verfahren nach einem der Ansprüche 1 bis 6, **dadurch gekennzeichnet, dass** mindestens eine der vorspringenden Wände so ausgebildet ist, dass sie eine Dicke hat, die zu einem radial inneren Rand der mindestens einen vorspringenden Wand (40) zunimmt.

9. Verfahren nach einem der vorhergehenden Ansprüche, **dadurch gekennzeichnet, dass** jede Zelle (44) nur an einer radial inneren Seite offen ist.

10. Verfahren nach einem der vorhergehenden Ansprüche, **dadurch gekennzeichnet, dass** eine oder mehrere der Zellen (44), in der Radialrichtung gesehen, im wesentlichen rautenförmig ist.

11. Verfahren nach einem der vorhergehenden Ansprüche, wobei die einwärts vorspringenden Wände (40) in einem Pfeilmuster gebildet werden.

12. Verfahren nach einem der vorhergehenden Ansprüche, wobei die einwärts vorspringenden Wände (40) in einem Bogenmuster gebildet werden.

13. Verfahren nach einem der vorhergehenden Ansprüche, wobei die einwärts vorspringenden Wände mit einer Höhe bis zu etwa 3 mm ausgebildet werden.

14. Verfahren nach einem der vorhergehenden Ansprüche, wobei die einwärts vorspringenden Wände (40) mit einem Abstand von etwa 2 mm voneinander ausgebildet werden.

## Revendications

1. Procédé de fabrication d'un élément d'étanchéité destiné à positionner radialement vers l'extérieur au moins certaines des aubes profilées (32) dans un turbomoteur (10), le procédé comprenant :
la formation d'une structure d'étanchéité (38) présentant une zone de surface radialement interne (33) ;
la formation d'une pluralité de parois en saillie (40) au niveau de la zone de surface radialement interne (33) pour former une pluralité de cellules ouvertes (44) ;
**caractérisé en ce que**
lesdites parois en saillie (40) sont formées pour présenter une épaisseur allant jusqu'à environ 0,4 mm,
et sont formées par dépôt de soudure au laser alimentée en poudre.

2. Procédé selon la revendication 1, **caractérisé en ce que** la formation de la structure d'étanchéité (38) comprend la formation d'une structure d'étanchéité (38) configurée pour faire au moins partie d'un boîtier généralement annulaire.

3. Procédé selon la revendication 1 ou la revendication 2, **caractérisé en ce que** les parois (40) sont formées pour se projeter sensiblement radialement vers l'intérieur depuis la zone de- surface radialement interne (33).

4. Procédé selon la revendication 1 ou 2 dans lequel les parois (40) sont formées pour se projeter vers l'intérieur suivant un angle allant jusqu'à environ 30 degrés depuis la direction radiale.

5. Procédé selon l'une quelconque des revendications précédentes, **caractérisé en ce que** les bords radialement internes des parois sont formés pour définir une face interne sensiblement en forme d'arc de l'élément d'étanchéité.

6. Procédé selon l'une quelconque des revendications précédentes, **caractérisé en ce que** la structure d'étanchéité (38) est formée au-dessus de sensiblement l'ensemble d'une zone de surface radialement interne (33) de l'élément d'étanchéité.

7. Procédé selon l'une quelconque des revendications précédentes, **caractérisé en ce qu'**au moins une des parois en saillie (4) est formée pour présenter une épaisseur qui diminue généralement en direction d'un bord radialement interne de la au moins une paroi en saillie (40).

8. Procédé selon l'une quelconque des revendications 1 à 6, **caractérisé en ce qu'**au moins une des parois en saillie est formée pour présenter une épaisseur qui diminue en direction d'un bord radialement interne de la au moins une paroi en saillie (40).

9. Procédé selon l'une quelconque des revendications précédentes, **caractérisé en ce que** chaque cellule (44) est ouverte uniquement au niveau d'un côté radialement interne.

10. Procédé selon l'une quelconque des revendications précédentes, **caractérisé en ce qu'**une ou plusieurs des cellules (44) est façonnée sensiblement en forme de diamant vu dans la direction radiale.

11. Procédé selon l'une quelconque des revendications précédentes dans lequel les parois se projetant vers l'intérieur (40) sont formées suivant un modèle de chevron.

12. Procédé selon l'une quelconque des revendications précédentes dans lequel les parois se projetant vers l'intérieur (40) sont formées suivant une configuration arquée.

13. Procédé selon l'une quelconque des revendications précédentes dans lequel les parois se projetant vers l'intérieur (40) sont formées pour présenter une hauteur allant jusqu'à environ 3 mm.

14. Procédé selon l'une quelconque des revendications précédentes dans lequel les parois se projetant vers l'intérieur (40) sont formées pour être espacées d'environ 2 mm les unes des autres.
